# FASCICULE DE BREVET EUROPEEN

(11) **EP 4 598 733 B1**
(45) Date de publication et mention de la délivrance du brevet: **02.09.2026**
(21) Numéro de dépôt: 23798822.5
(22) Date de dépôt: 29.09.2023
(51) Int. Cl.: B29C 70/16, B29C 70/54, B29C 70/38, B29C 64/209, B22F 12/50, B33Y 30/00

(54) **MACHINE D'APPLICATION DE FIBRES AVEC MOYENS D'ACHEMINEMENT DE FIBRES PARTICULIERS**
FASERAPPLIKATIONSMASCHINE MIT SPEZIELLEN FASERLEITMITTELN
FIBRE APPLICATION MACHINE WITH PARTICULAR FIBRE ROUTING MEANS

(30) Priorité: 05.10.2022 FR 2210198
(43) Date de publication de la demande: 13.08.2025
(73) Titulaire: Coriolis Group, 56530 Quéven (FR)
(72) Inventeur: LE MENEAH, Emmanuel, 29360 Clohars Carnoët (FR)
(86) Numéro de dépôt international: PCT/FR2023/000149
(87) Numéro de publication internationale: WO 2024/074769

(56) Documents cités:
- EP-B1- 2 311 627
- CN-B- 102 615 838
- DE-A1- 102013 107 039
- DE-A1- 102019 109 637
- FR-A1- 3 009 513
- US-A1- 2013 174 969

## Description

La présente invention concerne une machine d'application de fibres pour la réalisation de pièces en matériaux composites, et plus particulièrement des moyens d'acheminement de fibres particuliers d'une telle machine pour acheminer les fibres entre des moyens de stockage de fibres et une tête d'application. L'invention concerne également un procédé de fabrication de pièces en matériaux composites au moyen d'une machine correspondante.

Il est connu des machines d'application de fibres, appelées couramment machines de placement de fibres, pour l'application au contact sur un outillage de drapage, tel qu'un moule mâle ou femelle, d'une bande large formée de plusieurs fibres plates continues, de type rubans, sèches ou imprégnées de résine thermodurcissable ou thermoplastique, notamment des fibres de carbone, constituées d'une multitude de fils ou filaments de carbone.

Ces machines comprennent un système de déplacement d'une tête d'application de fibres, ladite tête comportant un rouleau d'application destiné à venir en contact contre le moule pour appliquer la bande et des moyens de guidage des fibres sur ledit rouleau d'application, des moyens de stockage de fibres, et des moyens d'acheminement des fibres desdits moyens de stockage vers la tête d'application.

Dans le document brevet WO 2012/160270, il a été proposé d'utiliser des moyens d'acheminement comprenant des premiers tubes flexibles, chaque tube flexible étant apte à recevoir une fibre dans son passage interne. Les premiers tubes flexibles sont fixés par leurs extrémités à des systèmes de fixation amont et aval, et présentent une longueur et une flexibilité suffisantes pour ne pas limiter les mouvements du système de déplacement de la tête. Chaque tube flexible est muni d'au moins une lame flexible longitudinale de section transversale rectangulaire, ladite lame flexible étant disposée sensiblement parallèlement au plan de transport de la fibre reçue dans le passage interne du tube flexible. De tels tubes flexibles forment des moyens d'acheminement simples de conception, d'encombrement et de coûts réduits, permettant d'obtenir des vitesses de défilement élevées, de déporter les moyens de stockage du système de déplacement, de supprimer les systèmes motorisés de récupération de mou pour les bobines de fibres, d'isoler les fibres de l'extérieur, et de simplifier le système de déplacement de la tête d'application, notamment d'utiliser un système de déplacement tel qu'un bras poly-articulé de type robot six axes. La lame flexible associée à chaque tube limite ou interdit la flexion transversale du tube dans le plan de la lame, ce qui permet de supprimer, ou tout au moins limiter, les risques de retournement de la fibre disposée dans le passage interne du tube flexible parallèlement à la lame, en particulier lors de certains déplacements du robot, en raison de flexions trop importantes des tubes flexibles et/ou de frottements trop importants des fibres dans les tubes flexibles. Le tube flexible peut effectuer des mouvements de flexion dans une direction perpendiculaire au plan de la lame et des mouvements de torsion pour permettre le déplacement de la tête de placement de fibres dans toutes les directions. L'assemblage du premier tube flexible et d'une lame distincte est réalisé par un second tube flexible, ce système d'assemblage maintient la lame sensiblement au contact du tube flexible tout en autorisant un déplacement longitudinal relatif de la lame flexible par rapport au premier tube. Le second tube flexible de maintien assure une liaison de type glissière entre le premier tube flexible d'acheminement et la lame flexible.

Lors du drapage de pièce de forme complexe, les tubes flexibles munies de leur lame flexible peuvent être soumis à des efforts de flexion et de torsion importants pouvant entrainer une détérioration, notamment au niveau de l'assemblage des lames flexibles aux systèmes de fixation.

Pour diminuer la flexion longitudinale du tube flexible dans la direction perpendiculaire au plan de la lame en sortie des systèmes de fixation, il a été proposé dans le document précité d'équiper les systèmes de fixation de lames de rigidification. Ces lames de rigidification sont montées sur les systèmes de fixation de part et d'autre du tube d'acheminement, et viennent en appui d'un côté contre le tube d'acheminement, et de l'autre côté contre la lame flexible. Le montage de ces lames de rigidification s'avère toutefois compliqué à mettre en œuvre.

EP2311627 décrit également des moyens d'acheminement comprenant des tubes flexibles, chaque tube flexible étant apte à recevoir une fibre dans son passage interne.

US2013/0174969, CN102615838 et FR3009513 décrivent des moyens d'acheminement comprenant une chaîne à maillons, avec plusieurs maillons ou segments montés de manière rotative les uns aux autres, des éléments de guidage tels que des galets étant agencés sur les axes de rotation des maillons pour guider les fibres le long des maillons.

DE102013107039 décrit également des moyens d'acheminement formé d'une chaine à maillons, chaque fibre étant guidée sur des galets se trouvant dans les maillons.

DE102019109 637 décrit une machine selon le préambule de la revendication 1, avec des moyens d'acheminement comprenant un tronçon formé d'un canal de guidage flexible, ayant une section transversale ouverte, et un tronçon formé d'une chaine à maillons tel que décrit dans le document précité DE102013107039, chaque fibre étant guidée par la chaîne à maillons puis par le canal de guidage.

Le but de la présente invention est de proposer une machine munie de moyens d'acheminement garantissant un bon acheminement des fibres, et qui soient simples à réaliser et robustes.

A cet effet, la présente invention propose une machine d'application de fibres comprenant
- une tête d'application de fibres, comportant de préférence un rouleau d'application et des moyens de guidage des fibres sur ledit rouleau,
- de préférence, un système de déplacement pour déplacer la tête d'application de fibres
- des moyens de stockage de fibre, et
- des moyens d'acheminement pour acheminer au moins une fibre desdits moyens de stockage vers la tête d'application, lesdits moyens d'acheminement comprenant au moins un tube d'acheminement flexible, reliant par exemple les moyens de stockage à la tête d'application, chaque tube d'acheminement étant apte à recevoir une fibre dans son passage interne, ledit tube d'acheminement étant monté par une extrémité aval à un système de fixation aval monté sur la tête d'application et par une extrémité amont à un système de fixation amont, par exemple monté au niveau des moyens de stockage,
caractérisée en ce que les moyens d'acheminement comprennent en outre un dispositif de guidage comprenant
- une chaîne comprenant d'une succession de segments rigides montés articulés les uns aux autres via des systèmes d'articulation, ladite chaîne s'étendant d'une extrémité amont jusqu'à une extrémité aval par laquelle ladite chaîne est assemblée au système de fixation aval, et
- des moyens de guidage répartis le long de la chaîne dans lesquels passent le ou les tubes d'acheminement.

Ce dispositif de guidage selon l'invention permet de contrôler le rayon de courbure des tubes d'acheminement, en particulier au niveau du système de fixation aval. Il permet d'éviter des contraintes trop importantes au niveau de la portion d'extrémité de tube d'acheminement pouvant entrainer une détérioration du tube d'acheminement et/ou de son éventuelle lame associée, et permet ainsi de proposer un système d'acheminement plus robuste.

Selon un mode de réalisation, la chaîne peut s'étendre jusqu'au système de fixation amont. Dans le cas d'une machine comprenant un système de déplacement formé d'un robot polyarticulé portant la tête, et de moyens d'acheminement pour acheminer les fibres jusqu'à la tête depuis des moyens de stockage, formés par exemple d'un cantre de bobines, positionnés à côté du robot, la chaîne peut s'interrompre avant les moyens de stockage.

Selon un mode de réalisation, la chaîne comprend des segments rigides montés articulés les uns aux autres via des systèmes d'articulation de type liaison rotule, par exemple à une liaison rotule ou à deux liaison rotule, chaque système d'articulation comprenant de préférence des moyens de butée pour limiter l'inclinaison entre deux segments successifs. L'utilisation de tels systèmes d'articulation de type liaison rotule, appelée également liaison sphérique, permet un déplacement aisé des tubes d'acheminement avec le poignet d'un robot tout en garantissant un parfait contrôle de la courbure des tubes d'acheminement. Selon un mode de réalisation, des segments de longueurs différentes peuvent être utilisés le long de la chaîne, la chaîne permettant de préférence un rayon de courbure plus faible au niveau du système de fixation aval.

Selon un mode de réalisation, la chaîne est constituée d'une succession de segments, chaque segment comprend en extrémité une partie convexe présentant une surface sphérique et une partie concave présentant une surface sphérique, la partie concave d'un segment recevant la partie convexe d'un segment adjacent pour former une liaison rotule entre les deux segments. Le système d'articulation est alors formé par les parties concaves et convexes des segments. Dans ce cas, des moyens de guidage, par exemple formés d'anneaux de guidage, sont montés sur les segments. Selon une variante, la chaîne comprend deux types de segment, des premiers segments munis de deux parties convexes et des seconds segments munis de deux parties concaves, la chaîne étant alors constituée d'une alternance de premiers segments et de seconds segments.

Selon un autre mode de réalisation, le système d'articulation comprend une pièce intermédiaire rigide intercalée entre deux segments rigides successifs, une pièce intermédiaire et un segment étant articulés entre eux par une liaison rotule, pour chaque liaison rotule, un premier élément parmi la pièce intermédiaire et le segment rigide est pourvu d'une partie convexe présentant une surface sphérique, l'autre élément étant pourvu d'une partie concave présentant une surface sphérique et apte à recevoir ladite partie convexe, des pièces intermédiaires étant de préférence équipées desdits moyens de guidage. Les moyens de guidage montés au niveau des systèmes d'articulation entre deux segments garantissent un bon guidage des tubes d'acheminement le long de la chaîne. Par ailleurs, l'intégration des moyens de guidage au niveau des pièces intermédiaires permet d'obtenir un montage simple et rapide du dispositif de guidage, des moyens de guidage et une pièce intermédiaire pouvant être formés en une seule pièce, par exemple en matériau plastique. Par ailleurs, chaque pièce intermédiaire reliée par des liaisons rotule aux deux segments adjacents est montée libre en rotation par rapport aux deux segments. Ainsi, les tubes d'acheminement passant dans les moyens de guidage peuvent pivoter autour de la chaîne, facilitant ainsi le déplacement des tubes d'acheminement lors du déplacement du robot. Selon un autre mode de réalisation, les moyens de guidage peuvent être montés sur les segments.

Selon un mode de réalisation, les segments comprennent en extrémité deux parties convexes, présentant chacune une surface convexe, chaque pièce intermédiaire comprend deux parties concaves opposées présentant chacune une surface sphérique, chaque partie concave étant apte à recevoir une partie convexe d'un segment pour former une liaison rotule. Ainsi, le dispositif de guidage peut comprendre des segments simples de conception, avec deux extrémités identiques, par exemple formé chacun d'un simple tube, par exemple cylindrique, avec deux embouts identiques, présentant des surfaces sphériques, emmanchés aux extrémités du tube. Une chaîne avec différentes longueurs de segment suivant les rayons de courbure maximums souhaités le long de la chaîne peut alors facilement être obtenue en faisant varier la longueur des tubes des segments. Selon d'autres modes de réalisation, les segments comprennent en extrémité des parties concaves et les pièces intermédiaires comprennent des parties convexes, ou les segments et les pièces intermédiaires comprennent chacun une partie concave et une partie convexe.

Selon un mode de réalisation, la chaîne comprend un câble s'étendant tout au long de la chaîne, passant dans des passages centraux des segments et des passages centraux des pièces intermédiaires, pour garantir le maintien des parties convexes engagées dans les parties concaves.

Selon un mode de réalisation, ledit câble est assemblé par une première extrémité aval au système de fixation aval, la chaîne comprenant à son extrémité aval un élément terminal, ledit élément terminal et le système de fixation aval étant articulés entre eux par une liaison rotule. Selon un mode de réalisation, le câble est assemblé par sa deuxième extrémité amont au dernier élément à l'extrémité amont de la chaîne, un écrou étant par exemple vissé sur la deuxième extrémité filetée du câble et vient en appui contre le dernier élément de la chaîne. De préférence, au moins un système à ressort de compression est intercalé et/ou intégré dans la chaîne. Ledit système à ressort de compression permet au moins de reprendre les éventuels jeux entre les segments et les pièces intermédiaires. Selon un mode de réalisation, le système à ressort de compression assure une mise sous tension des segments, permettant un retour élastique de la chaîne vers une position sensiblement rectiligne. Selon un mode de réalisation, plusieurs systèmes à ressort de compression sont prévus le long de la chaîne.

Selon un mode de réalisation, les moyens de guidage comprennent des anneaux disposés le long de la chaîne et dans lesquels passent le ou les tubes d'acheminement, chaque tube d'acheminement pouvant de préférence se déplacer longitudinalement dans chaque anneau de guidage dans lequel il passe.

Selon un mode de réalisation les moyens d'acheminement comprennent plusieurs tubes d'acheminement pour acheminer individuellement plusieurs fibres, les moyens de guidage comprenant, d'amont en aval le long de la chaîne, des anneaux pour guider et répartir les tubes d'acheminement autour de la chaîne, puis des anneaux pour guider progressivement les tubes d'acheminement sous la forme de deux rangées parallèles en entrée du système de fixation aval.

Selon un mode de réalisation, chaque tube d'acheminement est muni d'au moins une lame flexible longitudinale, de préférence de section transversale rectangulaire, chaque tube d'acheminement et sa lame flexible associée sont placés dans un second tube de maintien flexible, de sorte que ledit tube de maintien maintient ladite lame flexible contre le tube d'acheminement, tout en autorisant un déplacement longitudinal relatif de la lame flexible par rapport au tube d'acheminement, chaque tube de maintien passant dans les moyens de guidage du dispositif de guidage.

La présente invention a également pour objet un procédé de fabrication d'une pièce en matériau composite comprenant l'application de fibres continues sur une surface d'application, caractérisé en ce que l'application de fibres est réalisée au moyen d'une machine d'application de fibres tel que décrit précédemment, par déplacement relatif de la tête d'application par rapport à la surface de drapage selon des trajectoires de dépose.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés sur lesquels :
- la Figure 1 est une vue schématique de côté d'une machine de placement selon l'invention ;
- la Figure 2 est une vue schématique partielle en coupe des moyens d'acheminement illustrant des tubes d'acheminement, les systèmes de fixation amont et aval, et le dispositif de guidage pour guider les tubes d'acheminement ;
- la Figure 3 est une vue partielle en perspective des moyens d'acheminement de la figure 2, au niveau du système de fixation aval ;
- la Figure 4 est une vue partielle en perspective du dispositif de guidage ;
- la Figure 5 est une vue agrandie du détail D1 de la figure 2 ;
- la Figure 6 est une vue schématique partielle en coupe du dispositif de guidage illustrant l'inclinaison des segments de la chaîne ;
- la Figure 7 est une vue agrandie du détail D2 de la figure 2 ; et,
- la Figure 8 est une vue agrandie du détail D3 de la figure 2.

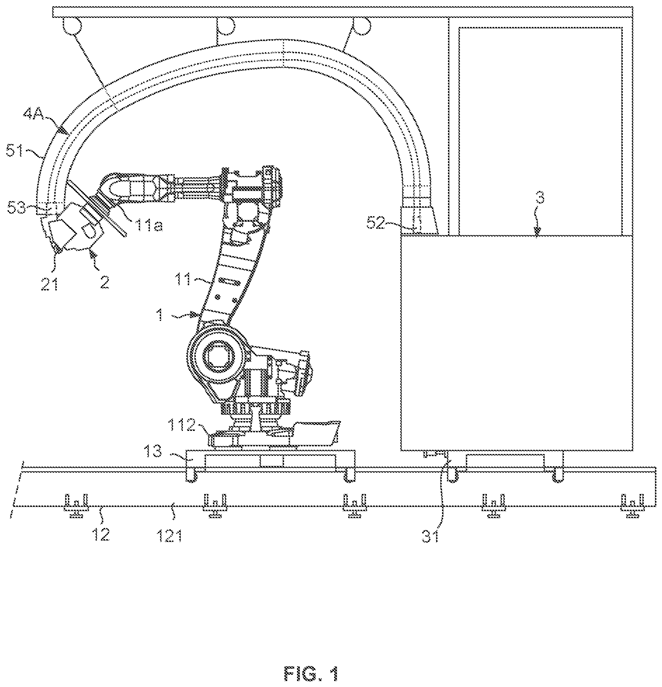

En référence à la figure 1, la machine de placement comprend un système de déplacement 1 formé d'un bras poly-articulé 11, du type robot six axes, connu en soi, monté mobile sur un axe linéaire 12, une tête d'application 2 montée au poignet d'extrémité 11a du bras polyarticulé, des moyens de stockage 3 de fibres, des moyens d'acheminement pour acheminer des fibres depuis lesdits moyens de stockage vers la tête d'application. Le bras poly-articulé 11 est fixé par son embase 112 sur un chariot 13 monté coulissant sur l'axe linéaire 12, ledit axe linéaire étant constitué de deux rails 121 parallèles fixés au sol. Le chariot est équipé de moyens d'entraînement, par exemple de type galets motorisés, asservis par une unité de commande pour le déplacement de la tête de placement le long de ces rails. La tête d'application de fibres 2, appelée également tête de placement de fibres, comprend de manière connue, un rouleau d'application 21 apte à venir en contact avec un moule pour appliquer une bande formée de plusieurs fibres, par exemple pré-imprégnées de résine. La machine est prévue pour l'application de fibres, par exemple de type fibres de carbone, conditionnées sous forme de bobines. Les moyens de stockage sont formés d'un cantre, schématiquement représenté sous la référence 3, pour recevoir les bobines de fibres. Le cantre est également monté sur un chariot suiveur 31, disposé sur les rails 121 et relié mécaniquement au chariot 13 portant le robot.

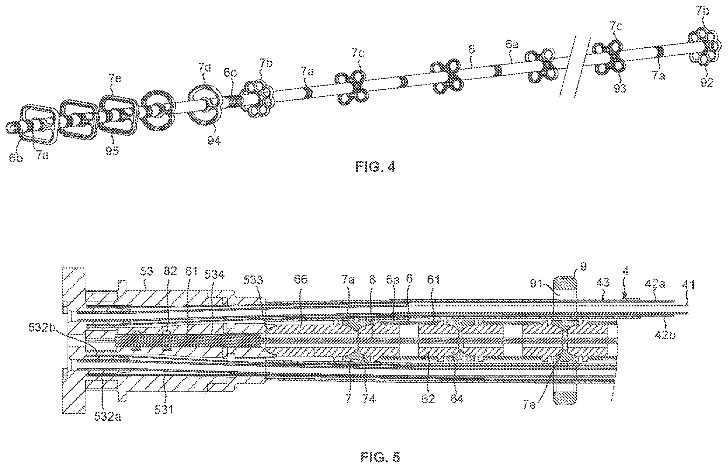

Les moyens d'acheminement comprennent des premiers tubes flexibles, appelés tubes d'acheminement, équipés de lames flexibles de rigidification. Les fibres sont acheminées individuellement dans ces tubes d'acheminement du cantre 3 à la tête de placement de fibres 2. Les tubes sont rassemblés en un faisceau, représenté schématiquement sous les références 4A sur la figure 1, et sont placés dans le passage interne d'une gaine 51 flexible. Dans l'exemple illustrée la machine est prévue pour l'application d'une bande de huit fibres, les moyens d'acheminement comprenant ainsi huit tubes d'acheminement. En référence à la figure 5, chaque tube d'acheminement 41 présente une paroi de section transversale rectangulaire, avec deux petits côtés et deux grands côtés. La paroi présente une surface interne et une surface externe sensiblement plane. Chaque tube d'acheminement est équipé extérieurement sur sensiblement toute sa longueur, et le long de chacun de ses grands côtés d'une lame métallique 42a, 42b flexible, appelée également clinquant. Les lames métalliques et le tube d'acheminement sont placés dans un second tube flexible 43, appelé tube de maintien, de section sensiblement rectangulaire de manière à maintenir les lames sensiblement parallèles aux surfaces extérieures des grands côtés du tube d'acheminement, tout en autorisant un déplacement longitudinal relatif des lames par rapport au tube d'acheminement. Le tube de maintien 44 est par exemple un tube flexible annelé, de section sensiblement rectangulaire, tel que décrit dans le document brevet précité. La lame a une largeur inférieure ou égale à celle d'un grand côté, de préférence inférieure. Le tube d'acheminement équipé de ses lames et placé dans le tube de maintien est désigné par la référence 4. Chaque tube d'acheminement est destiné à recevoir une fibre plate dans son passage interne de section rectangulaire, sensiblement parallèlement à ses grands côtés, et donc parallèlement aux lames métalliques. Les lames métalliques interdisent toute flexion transversale du tube d'acheminement dans le plan de la lame, mais autorise des flexions longitudinales du tube d'acheminement dans une direction perpendiculaire aux plans des lames ainsi que des torsions du tube d'acheminement. Lors des déplacements du robot pour les opérations de placement de fibres, les tubes d'acheminement vont se déformer par flexion perpendiculairement au plan de la lame et/ou torsion, de sorte que la fibre reste bien à plat parallèlement aux lames métalliques.

Les tubes d'acheminement sont assemblés en extrémité au cantre 3 et à la tête respectivement par un système de fixation amont 52 et un système de fixation aval 53. Chaque tube d'acheminement est assemblé de manière fixe, à savoir fixé sans liberté de déplacement, par sa portion d'extrémité au système de fixation amont 52, et assemblé de manière mobile en translation longitudinale, à savoir fixé avec une liberté de déplacement longitudinal, au système de fixation aval 53. Une des lames associées au tube d'acheminement est assemblée de manière fixe, par ses portions d'extrémité amont au système de fixation aval et au système de fixation aval. L'autre lame flexible est assemblée de manière fixe à l'un des systèmes de fixation, et mobile en translation longitudinale, à savoir fixée avec une liberté de déplacement longitudinal, à l'autre système de fixation, par exemple de manière fixe par sa portion d'extrémité aval au système de fixation aval, et de manière mobile en translation longitudinale, par sa portion d'extrémité amont au système de fixation amont. Le système de fixation 52 amont est similaire à celui décrit dans le document brevet précité, et comprend pour chaque tube d'acheminement un passage principal longitudinal, dans lequel un tube d'acheminement 41 est monté par sa portion d'extrémité amont. Dans le présent mode de réalisation, les passages principaux sont disposés en une rangée, les tubes d'acheminement étant assemblés en une rangée au niveau du système de fixation amont. Des passages secondaires sont prévus pour le montage des lames flexibles associées à chaque tube d'acheminement. Du côté de la tête de placement, les tubes d'acheminement sont assemblés en deux rangées au niveau du système de fixation amont 53, de manière à former deux nappes superposées de fibres en entrée de tête. Le système de fixation amont comprend pour chaque tube d'acheminement un passage principal 531, dans lequel un tube d'acheminement 41 est monté coulissant par sa portion d'extrémité aval. Les passages principaux sont disposés en deux rangée superposées. Des passages secondaires 532a, 532b sont disposés de part et d'autre du passage principal pour le montage des lames flexibles associées au tube d'acheminement.

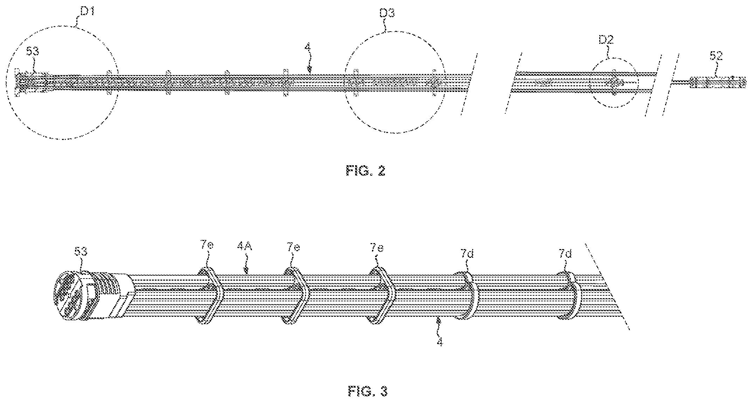

Selon l'invention, les moyens d'acheminement comprennent en outre un dispositif de guidage permettant de guider les tubes d'acheminement pour contrôler leur rayon de courbure, notamment au niveau du système de fixation aval. En référence aux figures 2 à 6, le dispositif de guidage est formé d'une chaîne comprenant une succession de segments 6 rigides montés articulés les uns aux autres via des systèmes d'articulation 7 de type liaison rotule. La chaîne est assemblée par une extrémité aval au système de fixation aval 53 et s'étend en direction du système de fixation amont 52. Dans le présent mode de réalisation, la chaîne ne s'étend pas jusqu'au système de guidage amont, l'extrémité amont de la chaîne est disposée entre le système de guidage aval et le système de guidage amont, par exemple à mi-distance entre les deux. Les systèmes d'articulation comprennent des pièces intermédiaires 7 intercalées entre deux segments successifs, chaque segment étant monté articulé par une liaison rotule sur une pièce intermédiaire, deux segments successifs étant ainsi reliés entre eux par deux liaisons rotule via la pièce intermédiaire.

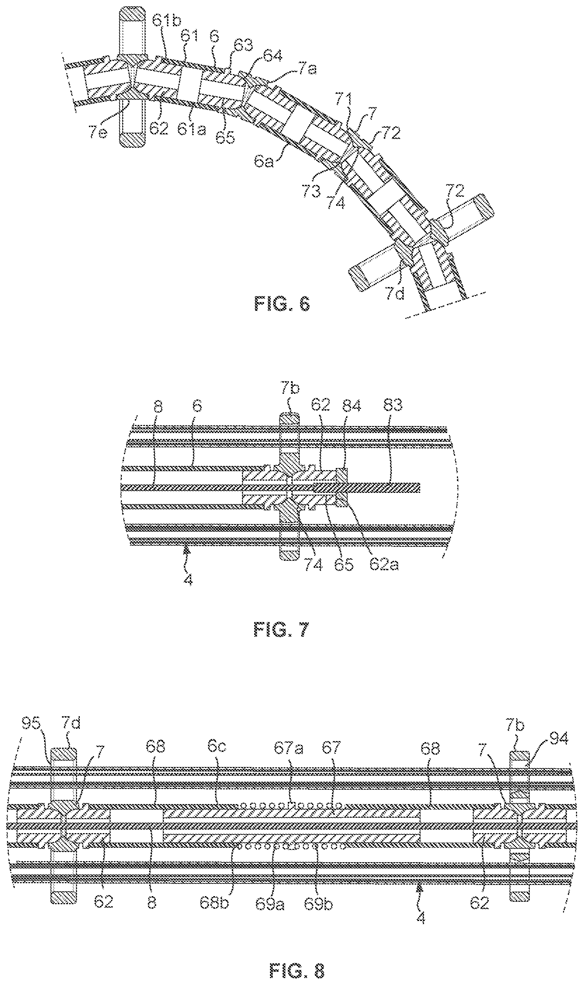

En référence notamment à la figure 6, chaque segment 6 est formé d'un tube cylindrique 61 par exemple métallique, notamment en aluminium. A chaque extrémité du tube, un embout 62, par exemple en matériau plastique, muni d'une collerette 63 est emmanché en force dans le passage central 61a du tube, l'embout venant pas sa collerette en butée contre le bord circulaire 61b du tube. Chaque embout présente une partie convexe 64 extérieure avec une surface sphérique, et présente un passage central 65 longitudinal. Chaque pièce intermédiaire 7 se présente sous la forme d'une bague comprenant deux bords circulaires 71 opposés, une paroi externe 72 et une paroi interne définissant le passage central 73 de la pièce intermédiaire. La paroi interne comprend deux parties concaves 74 opposées débouchant chacune sur un bord circulaire 71. Chaque partie concave présente une surface sphérique de forme complémentaire de celle de la surface sphérique des parties convexes 64. Dans le présent mode de réalisation, les surfaces sphériques des parties concaves et des parties convexes sont chacune constituées d'un segment sphérique, ce qui permet d'avoir un système d'articulation compact.

La chaîne est ainsi formée d'une alternance de segments 6 et de pièces intermédiaires 7, avec chaque partie convexe 64 d'un segment qui pénètre dans une partie concave 74 d'une pièce intermédiaire pour former une liaison rotule. La collerette 63 du segment sert de butée et permet de limiter le pivotement du segment en venant en butée contre le bord 71 de la pièce intermédiaire, tel qu'illustré à a figure 6. A titre d'exemple, la collerette permet de limiter l'inclinaison entre un segment et une pièce intermédiaire à un angle maximal d'environ 7°.

Les segments et les pièces intermédiaires sont maintenus emboîtés les uns dans les autres au moyen d'un câble 8, par exemple métallique, s'étendant d'un bout à l'autre de la chaîne en passant dans les passages centraux 65 des embouts, les passages centraux 61a des tubes et les passages centraux 73 des pièces intermédiaires. L'extrémité aval 81 du câble est assemblée au système de fixation aval 53. A titre d'exemple, en référence à la figure 5, l'extrémité aval 81 du câble est filetée, l'assemblage étant obtenu par un ou plusieurs écrous 82 vissés sur l'extrémité aval filetée du câble, et positionnés dans des logements du système de fixation aval. A l'extrémité aval de la chaîne, la chaîne se termine par exemple par un embout terminal 66 spécifique comprenant deux parties convexes opposées, cet embout terminal étant emboîté du côté amont dans une partie concave 74 d'une pièce intermédiaire 7, et du côté aval dans une partie concave 533 du système de fixation. L'extrémité aval 81 filetée du câble sortant du passage central de cet embout spécifique passe dans un passage central 534 du système de fixation aval qui débouche sur cette partie concave 533. Cet assemblage avec un embout spécifique permet de proposer un système de fixation aval compact. En variante, l'extrémité aval de la chaîne se termine par un segment 6 avec ses deux parties convexes 64, l'une emboîtée dans la partie concave 74 de la pièce intermédiaire et l'autre dans la partie concave 533 du système de fixation aval. A l'extrémité amont de la chaîne, en référence à la figure 7, la chaîne se termine par un embout 62 terminal, identique à ceux utilisés pour former les segments 6, cet embout terminal est emboîté par sa partie convexe dans une partie concave d'une pièce intermédiaire, l'extrémité amont 83 câble est filetée, et dépasse du passage central 65 de l'embout terminal. Un écrou 84 est vissé sur cette extrémité amont filetée et vient en appui contre le bord circulaire 62a de l'embout terminal.

En référence à la figure 8, la chaîne comprend un segment particulier 6c équipé d'un système à ressort de compression pour rattraper les éventuels jeux entre les segments. Ce segment particulier 6c disposé entre deux pièces intermédiaires 7 comprend deux tubes 68 montés coulissant par une extrémité sur un manchon 67 tubulaire muni d'un collet 67a, chaque tube 68 est équipé à son autre extrémité d'un embout 62 venant se loger dans une partie concave 74 de l'une des deux pièces intermédiaires entre lesquelles le segment est positionné. Deux ressorts de compression 69a, 69b sont montés sur le manchon 67 entre les deux tubes 68, chaque ressort venant en appui d'un côté contre le collet 67a et de l'autre côté contre le bord cicutaire 68b d'un tube. L'écrou 84 est vissé sur extrémité amont 83 du câble jusqu'à précontraindre les ressorts.

Le dispositif de guidage comprend en outre des moyens de guidage répartis le long de la chaîne dans lesquels passent les tubes d'acheminement 41 équipés de leurs lames flexibles 42a, 42b et placés dans des tubes de maintien 43. Ces moyens de guidage sont formés par des anneaux 9 disposés sur la paroi externe 72 de certaines pièces intermédiaires 7 le long de la chaîne, les anneaux et la pièce intermédiaire étant de préférence formés d'une seule pièce monobloc, par exemple en matériau plastique. Les pièces intermédiaires peuvent comprendre plusieurs anneaux destinés chacun au passage d'un tube de maintien entourant un tube d'acheminement et ses deux lames associées, ou un ou plusieurs anneaux chacun destiné au passage de plusieurs tubes de maintien. Les passages internes 91 des anneaux d'une pièce intermédiaire présentent des axes principaux disposés parallèlement à l'axe principal du passage central 73 de la pièce intermédiaire. Les anneaux permettent de guider les tubes de maintien autour de la chaîne, tout en autorisant un déplacement longitudinal des tubes de maintien dans leur passage interne lors du déplacement des moyens d'acheminement résultant d'un déplacement de la tête par le robot. Par ailleurs, les liaisons rotule entre deux segments et une pièce intermédiaire autorisent une rotation de la pièce intermédiaire par rapport aux segments lors des déplacements de la tête.

La chaîne comprend dans le présent mode de réalisation deux types de segment. La chaîne comprend du côté du système de fixation aval une succession de segments 6a de petite longueur pour permettre une courbure importante des tubes d'acheminement au niveau du poignet du robot, se prolongeant par une succession de segments 6b de grande longueur.

En référence à la figure 4, la chaîne comprend différents types de pièce intennédiaire :
- des pièces intermédiaires 7a sans anneau ;
- des pièces intermédiaires 7b, comprenant huit anneaux 91 répartis à espace angulaire régulier sur leur paroi externe, chaque anneau étant destiné à recevoir dans son passage interne, de section sensiblement circulaire un tube de maintien, dans lequel est placé un tube d'acheminement et deux lames ;
- des pièces intermédiaires 7c comprenant uniquement quatre anneaux 93 répartis à espace angulaire régulier sur leur paroi externe pour recevoir individuellement quatre des huit tubes de maintien ;
- des pièces intermédiaires 7d comprenant deux anneaux 94 diamétralement opposés, présentant chacun un passage interne ayant une section globalement en secteur circulaire, pour recevoir quatre tubes de maintien ; et,
- des pièces intermédiaires 7e comprenant deux anneaux 95 diamétralement opposés présentant chacun un passage interne de section globalement rectangulaire pour recevoir quatre tubes de maintien.

Les tubes d'acheminement sortant du système de fixation amont sont disposés côte à côte selon une seule rangée et doivent être amenés en deux rangées superposés dans le système de fixation aval. Les tubes de maintien contenant chacun un tube d'acheminement et ses deux lames associées, sortent en une rangée du système de fixation amont et s'étendent librement dans la gaine 51 jusqu'à l'extrémité aval de la chaîne. A cet extrémité aval, la chaîne comprend une pièce intermédiaire 7b avec huit anneaux 92, chaque tube de maintien passe dans un anneau. Ensuite, la chaîne comprend une alternance de pièces intermédiaires 7a sans anneau et de pièces intermédiaires 7c avec quatre anneaux 93. Pour deux pièces intermédiaires 7c avec quatre anneaux successives dans la chaîne, quatre tubes de maintien parmi les huit tubes de maintien passent dans les anneaux 93 de la première pièce intermédiaire 7c, puis les quatre autres tubes de maintien passent dans les quatre anneaux de la pièce intermédiaire suivante. Ensuite, sur le dernier tronçon de chaîne à proximité du poignet du robot, la chaîne comprend successivement d'amont en aval une pièce intermédiaire 7b à huit anneaux pour recevoir individuellement les huit tubes de maintien, puis deux pièces intermédiaires 7d à deux anneaux 94 en secteur circulaire, et trois pièces intermédiaires 7e avec deux anneaux 95 de section rectangulaire. Cet agencement des moyens de guidage sur ce dernier tronçon de chaîne permet de guider progressivement les huit tubes de maintien en deux rangées de tubes de maintien l'une au-dessus de l'autre.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications qui suivent.

## Revendications

1. Machine d'application de fibres comprenant une tête (2) d'application de fibres, des moyens (3) de stockage de fibre, et des moyens d'acheminement pour acheminer au moins une fibre desdits moyens de stockage vers la tête d'application, lesdits moyens d' acheminement comprenant
- au moins un tube d'acheminement (41) flexible, apte à recevoir une fibre dans son passage interne, et
- un dispositif de guidage comprenant une chaîne comprenant une succession de segments (6) rigides montés articulés les uns aux autres via des systèmes d'articulation,
**caractérisée en ce que** chaque tube d'acheminement est monté par une extrémité aval à un système de fixation aval (53) monté sur la tête d'application et par une extrémité amont à un système de fixation amont (52), ladite chaîne s'étendant d'une extrémité amont jusqu'à une extrémité aval par laquelle ladite chaîne est assemblée au système de fixation aval, ledit dispositif de guidage comprenant en outre des moyens de guidage (9) répartis le long de la chaîne dans lesquels passent le ou les tubes d'acheminement.

2. Machine selon la revendication 1, **caractérisée en ce que** la chaîne comprend des segments (6) rigides montés articulés les uns aux autres via des systèmes d'articulation de type liaison rotule, chaque système d'articulation comprenant des moyens de butée (63, 71) pour limiter l'inclinaison entre deux segments successifs.

3. Machine selon la revendication 2, **caractérisée en ce que** le système d'articulation comprend une pièce intermédiaire (7) rigide intercalée entre deux segments (6) successifs, une pièce intermédiaire et un segment étant articulés entre eux par une liaison rotule, pour chaque liaison rotule, un premier élément parmi la pièce intermédiaire et le segment est pourvu d'une partie convexe présentant une surface sphérique, l'autre élément étant pourvu d'une partie concave présentant une surface sphérique et apte à recevoir ladite partie convexe, des pièces intermédiaires (7b-7e) étant équipées desdits moyens de guidage (9).

4. Machine selon la revendication 3, **caractérisée en ce que** les segments (6) comprennent en extrémité deux parties convexes (64), présentant chacune une surface convexe, chaque pièce intermédiaire (7) comprend deux parties concaves (74) opposées présentant chacune une surface sphérique, chaque partie concave étant apte à recevoir une partie convexe d'un segment pour former une liaison rotule.

5. Machine selon la revendication 3 ou 4, **caractérisée en ce que** la chaîne comprend un câble (8) s'étendant tout au long de la chaîne, passant dans des passages centraux (61a, 65) des segments et des passages centraux (73) des pièces intermédiaires, pour garantir le maintien des parties convexes (64) engagées dans les parties concaves (74).

6. Machine selon la revendication 5, **caractérisée en ce que** ledit câble (8) est assemblée par une première extrémité aval (81) au système de fixation aval (53), la chaîne comprenant à son extrémité aval un élément terminal (66), ledit élément terminal et le système de fixation aval étant articulés entre eux par une liaison rotule.

7. Machine selon l'une des revendications 1 à 6, **caractérisée en ce que** les moyens de guidage comprennent des anneaux (8) disposés le long de la chaîne et dans lesquels passent le ou les tubes d'acheminement.

8. Machine selon l'une des revendications 1 à 7, **caractérisée en ce que** les moyens d'acheminement comprennent plusieurs tubes d'acheminement (41) pour acheminer individuellement plusieurs fibres, les moyens de guidage comprenant, d'amont en aval le long de la chaîne, des anneaux (92, 93) pour guider et répartir les tubes d'acheminement autour de la chaîne, puis des anneaux (94, 95) pour guider progressivement les tubes d'acheminement sous la forme de deux rangées parallèles en entrée du système de fixation aval.

9. Machine selon l'une des revendications 1 à 8, **caractérisée en ce que** chaque tube d'acheminement (41) est muni d'au moins une lame flexible (42a, 42b) longitudinale, chaque tube d'acheminement et sa lame flexible associée sont placés dans un second tube de maintien (43) flexible, chaque tube de maintien passant dans les moyens de guidage (8) du dispositif de guidage.

10. Procédé de fabrication d'une pièce en matériau composite comprenant l'application de fibres continues sur une surface d'application, **caractérisé en ce que** l'application de fibres est réalisée au moyen d'une machine d'application de fibres selon l'une des revendications 1 à 9, par déplacement relatif de la tête d'application par rapport à la surface de drapage selon des trajectoires de dépose.

## Patentansprüche

1. Faserapplikationsmaschine, umfassend einen Faserapplikationskopf (2), Faserspeichermittel (3) und Fördermittel zum Fördern mindestens einer Faser der Speichermittel zum Applikationskopf, wobei die Fördermittel umfassen
- mindestens ein flexibles Förderrohr (41), das in seinem inneren Durchgang eine Faser aufnehmen kann, und
- eine Führungsvorrichtung, die eine Kette umfasst, die eine Abfolge von starren Segmenten (6) umfasst, die über Gelenksysteme aneinander gelenkig montiert sind,
**dadurch gekennzeichnet, dass** jedes Förderrohr von einem nachgeschalteten Ende an ein nachgeschaltetes Befestigungssystem (53), das am Anwendungskopf montiert ist, und von einem vorgeschalteten Ende an ein vorgeschaltetes Befestigungssystem (52) montiert ist, wobei sich die Kette von einem vorgeschalteten Ende bis zu einem nachgeschalteten Ende erstreckt, durch das die Kette mit dem nachgeschalteten Befestigungssystem verbunden ist, wobei die Führungsvorrichtung ferner Führungsmittel (9) umfasst, die entlang der Kette verteilt sind, durch die die Förderrohre führen.

2. Maschine nach Anspruch 1, **dadurch gekennzeichnet, dass** die Kette starre Segmente (6) umfasst, die über Gelenksysteme vom Typ Kugelverbindung miteinander gelenkig montiert sind, wobei jedes Gelenksystem Anschlagmittel (63, 71) umfasst, um die Neigung zwischen zwei aufeinanderfolgenden Segmenten zu begrenzen.

3. Maschine nach Anspruch 2, **dadurch gekennzeichnet, dass** das Gelenksystem ein starres Zwischenstück (7) umfasst, das zwischen zwei aufeinanderfolgende Segmente (6) eingelegt ist, wobei ein Zwischenstück und ein Segment durch eine Kugelverbindung miteinander gelenkt sind, wobei für jede Kugelverbindung ein erstes Element zwischen dem Zwischenstück und dem Segment mit einem konvexen Teil, das eine kugelförmige Oberfläche aufweist, versehen ist, wobei das andere Element mit einem konkaven Teil, das eine kugelförmige Oberfläche aufweist, versehen ist und dazu ausgelegt ist, den konvexen Teil aufzunehmen, wobei die Zwischenstücke (7b-7e) mit den Führungsmitteln (9) ausgestattet sind.

4. Maschine nach Anspruch 3, **dadurch gekennzeichnet, dass** die Segmente (6) am Ende zwei konvexe Teile (64) umfassen, die jeweils eine konvexe Oberfläche aufweisen, wobei jedes Zwischenteil (7) zwei gegenüberliegende konkave Teile (74) aufweist, die jeweils eine kugelförmige Oberfläche aufweisen, wobei jeder konkave Teil dazu ausgelegt ist, einen konvexen Teil eines Segments aufzunehmen, um eine Kugelverbindung zu bilden.

5. Maschine nach Anspruch 3 oder 4, **dadurch gekennzeichnet, dass** die Kette ein sich entlang der Kette erstreckendes Kabel (8) umfasst, das in Mitteldurchgängen (61a, 65) der Segmente und Mitteldurchgängen (73) der Zwischenteile verläuft, um das Halten der konvexen Teile (64) zu gewährleisten, die in die konkaven Teile (74) eingreifen.

6. Maschine nach Anspruch 5, **dadurch gekennzeichnet, dass** das Kabel (8) durch ein erstes nachgeschaltetes Ende (81) mit dem nachgeschalteten Befestigungssystem (53) verbunden ist, wobei die Kette an ihrem nachgeschalteten Ende ein Endelement (66) umfasst, wobei das Endelement und das nachgeschaltete Befestigungssystem durch eine Kugelverbindung miteinander gelenkig verbunden sind.

7. Maschine nach einem der Ansprüche 1 bis 6, **dadurch gekennzeichnet, dass** die Führungsmittel Ringe (8) umfassen, die entlang der Kette angeordnet sind und durch die das oder die Förderrohre führen.

8. Maschine nach einem der Ansprüche 1 bis 7, **dadurch gekennzeichnet, dass** die Fördermittel mehrere Förderrohre (41) umfassen, um einzeln mehrere Fasern zu befördern, wobei die Führungsmittel vor- und nachgelagert entlang der Kette Ringe (92, 93) zum Führen und Verteilen der Förderrohre um die Kette, danach Ringe (94, 95) zum schrittweisen Führen der Förderrohre in Form von zwei parallelen Reihen am Eingang des nachgeschalteten Befestigungssystems, umfassen.

9. Vorrichtung nach einem der Ansprüche 1 bis 8, **dadurch gekennzeichnet, dass** jedes Förderrohr (41) mit mindestens einer flexiblen Längslamelle (42a, 42b) versehen ist, jedes Förderrohr und die ihm zugeordnete flexible Lamelle in einem zweiten flexiblen Halterohr (43) angeordnet sind, wobei jedes Halterohr durch die Führungsmittel (8) der Führungsvorrichtung verläuft.

10. Verfahren zur Herstellung eines Bauteils aus Verbundmaterial, das das Auftragen von Endlosfasern auf eine Auftragsfläche umfasst, **dadurch gekennzeichnet, dass** das Auftragen der Fasern mittels einer Faser-Auftragsmaschine nach einem der Ansprüche 1 bis 9 durch eine Relativbewegung des Auftragskopfes gegenüber der Beschichtungsfläche entlang von Ablagebahnen erfolgt.

## Claims

1. Fibre application machine comprising a fibre application head (2), fibre storage means (3), and conveying means for conveying at least one fibre from the said storage means to the application head, the said conveying means comprising
- at least one flexible conveying tube (41), able to receive a fibre in its internal passage, and
- a guiding device comprising a chain comprising a succession of rigid segments (6) mounted so as to be articulated to one another via articulation systems,
**characterized in that** each conveying tube is mounted by a downstream end to a downstream attachment system (53) mounted on the application head and by an upstream end to an upstream attachment system (52), the said chain extending from an upstream end to a downstream end by which the said chain is connected to the downstream attachment system, and the guiding device further comprising guide means (9) distributed along the chain through which the conveying tube or tubes pass.

2. Machine according to claim 1, **characterized in that** the chain comprises rigid segments (6) mounted so as to be articulated to one another via articulation systems of the ball-and-socket joint type, each articulation system comprising stop means (63, 71) for limiting the inclination between two successive segments.

3. Machine according to claim 2, **characterized in that** the articulation system comprises a rigid intermediate piece (7) interposed between two successive segments (6), an intermediate piece and a segment being articulated together by a ball-and-socket joint, for each ball-and-socket joint, a first element among the intermediate piece and the segment is provided with a convex part having a spherical surface, the other element being provided with a concave part having a spherical surface and able to receive the said convex part, intermediate pieces (7b-7e) being equipped with the said guide means (9).

4. Machine according to claim 3, **characterized in that** the segments (6) comprise two convex parts (64) at their ends, each having a convex surface, each intermediate piece (7) comprises two opposite concave parts (74) each having a spherical surface, each concave part being able to receive a convex part of a segment in order to form a ball-and-socket joint.

5. Machine according to claim 3 or 4, **characterized in that** the chain comprises a cable (8) extending throughout the chain, passing through central passages (61a, 65) of the segments and central passages (73) of the intermediate pieces, to ensure the holding of the convex parts (64) engaged in the concave parts (74).

6. Machine according to claim 5, **characterized in that** the said cable (8) is connected by a first downstream end (81) to the downstream attachment system (53), the chain comprising at its downstream end a terminal element (66), the said terminal element and the downstream attachment system being articulated together by a ball-and-socket joint.

7. Machine according to one of claims 1 to 6, **characterized in that** the guide means comprise rings (8) arranged along the chain and through which the conveying tube or tubes pass.

8. Machine according to one of claims 1 to 7, **characterized in that** the conveying means comprise a plurality of conveying tubes (41) for individually conveying a plurality of fibres, the guide means comprising, from upstream to downstream along the chain, rings (92, 93) for guiding and distributing the conveying tubes around the chain, and then rings (94, 95) for progressively guiding the conveying tubes in the form of two parallel rows at the inlet to the downstream attachment system.

9. Machine according to one of claims 1 to 8, **characterized in that** each conveying tube (41) is provided with at least one longitudinal flexible blade (42a, 42b), each conveying tube and its associated flexible blade are placed in a second flexible holding tube (43), each holding tube passing in the guide means (8) of the guide device.

10. Method for manufacturing a composite material part comprising the application of continuous fibres onto an application surface, **characterized in that** the application of fibres is carried out by means of a fibre application machine according to one of claims 1 to 9, by relative displacement of the application head with respect to the lay-up surface according to deposition trajectories.
